# EUROPÄISCHE PATENTSCHRIFT

(11) **EP 0 534 927 B1**
(45) Veröffentlichungstag und Bekanntmachung des Hinweises auf die Patenterteilung: **06.12.1995**
(21) Anmeldenummer: 92890190.9
(22) Anmeldetag: 01.09.1992
(51) Int. Cl.: F16D 3/72

(54) **Kupplungsglied aus faserverstärktem Kunststoff**
Coupling element made of fiber-reinforced plastic
Pièce d'accouplement en matière plastique renforcée de fibres

(30) Priorität: 24.09.1991 AT 1920/91
(43) Veröffentlichungstag der Anmeldung: 31.03.1993
(73) Patentinhaber: DR. ING. GEISLINGER & CO. SCHWINGUNGSTECHNIK GESELLSCHAFT m.b.H., A-5020 Salzburg (AT)
(72) Erfinder: Pfeifer, Peter, Dipl.-Ing., A-5020 Salzburg (AT)
(74) Vertreter: Hübscher, Heiner, Dipl.-Ing.

(56) Entgegenhaltungen:
- EP-A- 0 022 467
- EP-A- 0 064 151
- EP-A- 0 413 677
- FR-A- 1 545 229
- FR-A- 2 080 428
- PATENT ABSTRACTS OF JAPAN vol. 8, no. 154 (M-310)(1591) 18. Juli 1984 & JP-A-59 050 216 ( HONDA GIKEN KOGYO ) 23. März 1984

## Beschreibung

Die Erfindung bezieht sich auf ein Kupplungsglied zum Einbau in eine drehmomentübertragende Antriebsverbindung mit einem Rohrteil und wenigstens einem stirnseitig anschließenden Flanschteil, wobei Rohr- und Flanschteile aus faserverstärktem Kunststoff bestehen.

Kupplungsglieder aus faserverstärktem Kunststoff haben sich bereits bewährt, da sie bei ihrem Einsatz als Verbindungelement zwischen den beiden Hälften einer Wellenkupplung oder unmittelbar als Wellenteil in einem Antriebsstrang nicht nur wegen des speziellen Verlaufes ihrer Verstärkungsfasern eine einwandfreie Drehmomentübertragung gewährleisten, sondern auch wegen der Biegefähigkeit ihrer membranförmigen Flanschteile einen Axialversatz der miteinander gekuppelten Antriebsteile auszugleichen erlauben. Darüber hinaus kommt es durch das Kunststoffmaterial der Kupplungsglieder zu einer guten Schalldämmung, die eine Weiterleitung von Körperschall vermindert. Wie aus der EP-A1-0 413 677 hervorgeht, bilden bisher die Rohr- und Flanschteile des Kupplungsgliedes einen einstückigen faserverstärkten Kunststoffkörper, was einen beträchtlichen Herstellungsaufwand mit sich bringt. Abgesehen davon können die Verstärkungsfasern hinsichtlich Verlauf, Dichte und Schichtung nur beschränkt an die zu erwartenden Belastungsverhältnisse und Ausgleichsbewegungen angepaßt werden, da die Fasern vom Rohrteil auf die Flanschteile durchlaufen und damit die Faseranordnung in den Flansch- und Rohrteilen in einem bestimmten Ausmaß voneinander abhängen.

Der Erfindung liegt daher die Aufgabe zugrunde, diese Mängel zu beseitigen und ein Kupplungsglied der eingangs geschilderten Art zu schaffen, das sich durch seine rationelle Herstellbarkeit auszeichnet und in seinen Übertragungs- und Ausgleichseigenschaften gut auf unterschiedlichste Gegebenheiten abgestimmt werden kann.

Die Erfindung löst diese Aufgabe dadurch, daß Rohr- und Flanschteile voneinander getrennt vorgefertigt und miteinander unter Verwendung einer Muffe verklebt sind. Durch die Zerlegung des Kupplungsgliedes in Flansch- und Rohrteile entstehen Einzelteile herstellungstechnisch einfacherer Form, die dazu noch weitgehend unabhängig voneinander in ihren Faserstrukturen auf die gewünschten Biegeeigenschaften und Belastungsfähigkeiten ausgerichtet werden können. Die so individuell vorgefertigten Teile werden miteinander formgerecht verklebt, wobei die Verklebung eine entsprechende Festigkeit der Verbindung garantiert.

Greifen die Flanschteile mit einem Ansatzstutzen zwischen Rohrteil und Muffe ein, wobei vorzugsweise die Rohrteilenden und die Ansatzstutzen im Überlappungsbereich eine gegengleich abnehmende Wandstärke besitzen, wird die Klebestelle in den Rohrteilbereich verlegt und die Anschlußverhältnisse bei der Befestigung der Flanschteile an den zugehörigen Kupplungsteilen und auch die Bewegungsfreiheit der Flanschteile bleiben unbeeinträchtigt. Eine konische Wandstärkenabnahme des Rohrteiles einerseits und eine dazu parallele Wandstärkenzunahme des Ansatzstutzens anderseits führt zu einer dem Verlauf der Drehmomentenübertragung zwischen Flanschteil und Rohrteil angepaßten Konstruktion, da die Drehmomente im Maße der Wandstärkenabnahme des Rohrteiles in zunehmendem Ausmaß vom Flanschteil übertragen werden und umgekehrt.

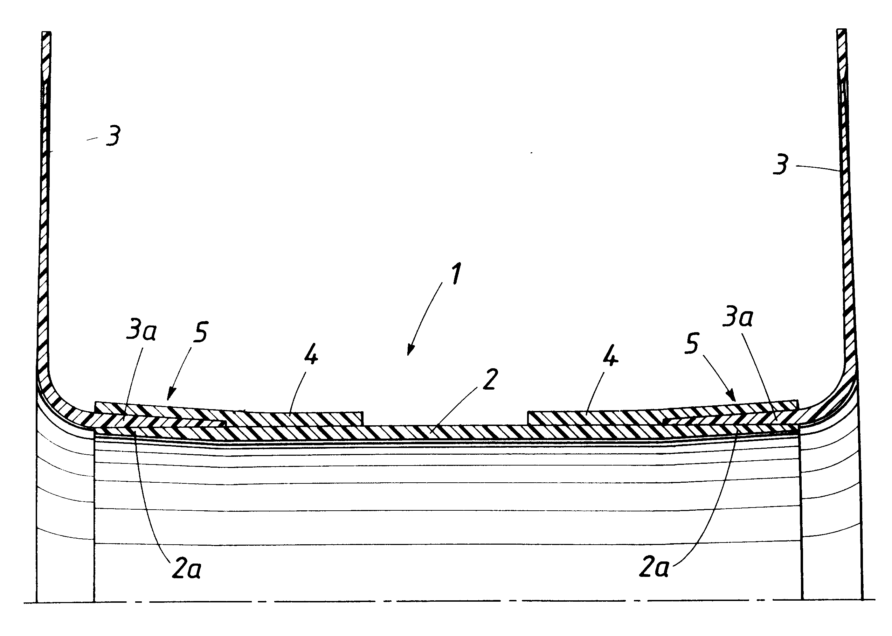

In der Zeichnung ist ein Ausführungsbeispiel eines erfindungsgemäßen Kupplungsgliedes schematisch an Hand eines halben Axialschnittes näher veranschaulicht.

Ein beugeelastisches, torsionssteifes Kupplungsglied 1, umfaßt einen mittleren Rohrteil 2 und zwei stirnseitig anschließende Flanschteile 3, wobei die Rohr- und Flanschteile 2, 3 aus faserverstärktem Kunststoff bestehen. Zur Vereinfachung der Herstellung und zur besseren Anpaßbarkeit der jeweiligen Eigenschaften der Rohr- und Flanschteile an unterschiedliche Bedingungen werden die Rohr- und Flanschteile 2, 3 voneinander getrennt gefertigt und miteinander unter Verwendung einer ebenfalls aus faserverstärktem Kunststoff bestehenden Muffe 4 verklebt. Dazu bilden die Flanschteile 3 axial zum Rohrteil 2 hin vorkragende Ansatzstutzen 3a, die zwischen Muffe 4 und Rohrteil 2 eingreifen, womit die Flanschteile 3 einerseits direkt und anderseits über die Muffe 4 indirekt mit dem Rohrteil 2 verklebt werden und die erforderliche feste Verbindung gewährleistet ist. Die Ansatzstutzen 3a und die Rohrteilenden 2a weisen dabei im Überlappungsbereich 5 jeweils eine konisch abnehmende Wandstärke auf, so daß sich hier die Wandstärken der miteinander verklebten Teile zueinander etwa wie die von diesen Teilen zu übertragenden Drehmomentanteile verhalten.

## Patentansprüche

1. Kupplungsglied (1) zum Einbau in eine drehmomentübertragende Antriebsverbindung, mit einem Rohrteil (2) und wenigstens einem stirnseitig anschließenden Flanschteil (3), wobei Rohr- und Flanschteile (2,5) aus faserverstärktem Kunststoff bestehen, dadurch gekennzeichnet, daß Rohrund Flanschteile (2, 3) voneinander getrennt vorgefertigt und miteinander unter Verwendung einer Muffe (4) verklebt sind.

2. Kupplungsglied nach Anspruch 1, dadurch gekennzeichnet, daß die Flanschteile (3) mit einem Ansatzstutzen (3a) zwischen Rohrteil (2) und Muffe (4) eingreifen.

3. Kupplungsglied nach Anspruch 2, dadurch gekennzeichnet, daß die Rohrteilenden (2a) und die Ansatzstutzen (3a) im Überlappungsbereich (5) eine gegengleich abnehmende Wandstärke besitzen.

## Claims

1. A coupling element (1) for installation in a torque-transmitting drive connection, comprising a tubular part (2) and at least one flange parts (3) adjoining it on the end face, the tubular and flange parts (2, 5) consisting of fibre-reinforced plastic, characterised in that the tubular and flange parts (2, 3) are prefabricated separately from one another and stuck together using a sleeve (4).

2. A coupling element according to claim 1, characterised in that the flange parts (3) engage between the tubular part (2) and the sleeve (4) by an attachment (3a).

3. A coupling element according to claim 2, characterised in that the tubular part ends (2a) and the attachments (3a) have a wall thickness decreasing in opposite and equal relationship in the overlap zone (5).

## Revendications

1. Organe d'accouplement (1), destiné au montage dans une liaison d'entraînement transmettant un couple, avec une partie tube (2) et au moins une partie bride (3) s'y raccordant frontalement, les parties tube et bride (2, 5) étant constituées d'une matière synthétique renforcée par des fibres, caractérisé en ce que les parties tube et bride (2, 5) sont préfabriquées séparément et collées ensemble avec utilisation d'un manchon (4).

2. Organe d'accouplement selon la revendication 1, caractérisé en ce que les parties bride (3) s'engagent par une tubulure formant appendice (3a), entre la partie tube (2) et le manchon (4).

3. Organe d'accouplement selon la revendication 2, caractérisé en ce que les extrémités de parties tube (2a) et les tubulures formant appendice (3a) ont dans la zone de chevauchement (5) une épaisseur de paroi allant en diminuant dans la même direction.
